# EUROPÄISCHE PATENTSCHRIFT

(11) **EP 1 238 222 B1**
(45) Veröffentlichungstag und Bekanntmachung des Hinweises auf die Patenterteilung: **17.03.2004**
(21) Anmeldenummer: 00992200.6
(22) Anmeldetag: 30.09.2000
(51) Int. Cl.: F16L 3/26

(54) **AUS MINDESTENS EINEM PROFILELEMENT GEBILDETE MONTAGESCHIENE**
ASSEMBLY RAIL FORMED OUT OF AT LEAST ONE PROFILE ELEMENT
RAIL DE MONTAGE FORME D'AU MOINS UN ELEMENT PROFILE

(30) Priorität: 07.10.1999 DE 29917734 U
(43) Veröffentlichungstag der Anmeldung: 11.09.2002
(73) Patentinhaber: HALFEN GmbH & CO. Kommanditgesellschaft, 40764 Langenfeld-Richrath (DE)
(72) Erfinder: BINNA, Michael, 46238 Bottrop (DE); GÖRTZ, Beate, 50937 Köln (DE); HANKE, Andreas, 42799 Leichlingen (DE); NEUMANN, Renate, 40595 Düsseldorf (DE); KIRCHNER, Georg, 42697 Solingen (DE)
(74) Vertreter: Riedel, Peter
(86) Internationale Anmeldenummer: PCT/EP2000/009624
(87) Internationale Veröffentlichungsnummer: WO 2001/025664

(56) Entgegenhaltungen:
- FR-A- 2 673 051
- US-A- 4 238 550
- US-A- 5 012 938
- US-A- 5 326 204
- US-A- 5 584 624
- US-A- 5 605 239
- US-A- 5 669 260
- US-A- 5 876 165

## Beschreibung

Die Erfindung betrifft eine aus mindestens einem Profilelement gebildete Montageschiene der im Oberbegriff des Anspruchs 1 angegebenen Gattung.

In US 5,704,571 A ist eine Tragkonstruktion beschrieben, die an Wänden, Decken oder dergl. befestigbare Profilelemente umfaßt. Diese Profilelemente weisen einen entlang einer Seite in Längsrichtung des Profilelementes verlaufenden Schienenschlitz auf, der zwischen neben dem Schienenschlitz verlaufenden, nach innen gerichteten Stützschenkeln angeordnet ist. An dem Profilelement werden Rungen befestigt, die zur Abstützung von Rohren, Kabeln oder dergleichen dienen. Diese Rungen werden vorzugsweise mittels Hammerkopfschrauben an den Profilelementen angeschraubt. Sofern erforderlich, können auch zwei Profilelemente jeweils mit ihrem Rücken aneinander liegend verbunden werden, wodurch die Befestigungsmöglichkeiten weiter erhöht werden.

Solche Profilelemente sind in vielfältiger Weise bekannt, sie umfassen jedoch üblicherweise das gleiche Grundelement, wobei die parallel verlaufenden Profilelemente mit ihren Längsseiten aneinander liegend zu einer Montageschiene zusammengefaßt sind. Es ist darüber hinaus bekannt, die Montageschiene mit Versteifungsplatten zu versehen, die flächig an den Seitenwänden oder der Rückwand der Montageschiene angeschweißt sind.

Bei den bekannten Bauarten ist je nach Einsatzzweck eine anders gestaltete Montageschiene erforderlich, was eine Vielzahl unterschiedlich gestalteter Montageschienen erforderlich macht. Auch das Zusammenschrauben mehrerer Profilelemente des gleichen Typs zu einer gewünschten Montageschiene an Ort und Stelle stellt einen erheblichen Montageaufwand dar, der aus Kostengründen häufig unrentabel ist. Die unterschiedlichen, durch die Zusammenfassung einzelner Profilelemente entstehenden Formen erfordern häufig auch unterschiedlich gestaltete Anschlußelemente, die dem jeweiligen Zweck angepaßt werden müssen, so daß die Lagerhaltung und Montage zu erheblichen Kosten führt.

Der vorliegenden Erfindung liegt daher die Aufgabe zugrunde, eine Montageschiene der im Oberbegriff des Anspruchs 1 genannten Gattung zu schaffen, die universell verwendbar ist.

Diese Aufgabe wird erfindungsgemäß durch eine Montageschiene mit den Merkmalen des Anspruchs 1 gelöst.

Die Montageschiene ist äußerst torsionssteif und besitzt eine gegenüber den bisher bekannten Anordnungen wesentlich erhöhte Tragfähigkeit. Besondere konstruktive Maßnahmen zur zusätzlichen Versteifung, wie diese bei bisherigen Profilelementen erforderlich waren, werden bei der erfindungsgemäßen Montageschiene nicht benötigt. Bin weiterer Vorteil wird darin gesehen, daß die Außenkontur der Montageschiene unabhängig von der Form und Größe des Profilelementes ist. Die Außenmaße der Rahmenkonstruktion können mit der geschlossenen Schiene größer ausgebildet werden als mit vergleichbar offener C-Schiene, da diese Formgebung die Gefahr der Biegedrillknickung ausschließt. Es werden größere Längen der Montageschienen aufgrund des besseren Stabilitätsverhaltens des geschlossenen Profils möglich.

Gemäß einer vorteilhaften Ausgestaltung des Erfindungsgegenstandes ist das Profilelement derart in dem Hohlprofil aufgenommen, daß die Seite des Profilelementes, an der sich der Schienenschlitz befindet, bündig mit der Mantelfläche des Hohlprofils abschließt. Alternativ hierzu ist es jedoch auch möglich, das Profilelement derart in dem Hohlprofil anzuordnen, daß die betreffende Seite mit dem Schienenschlitz über die Kontur der Mantelfläche des Hohlprofils hervorsteht. Dabei ist dieser Überstand relativ gering bemessen und dürfte im Regelfall ≤ 5 mm liegen.

Gemäß einer Weiterbildung des Erfindungsgedankens wird das Profilelement mit den Randstreifen des Hohlprofils stoffschlüssig verbunden (Löten, Schweißen). Damit die Festigkeit über die Gesamtlänge der Montageschiene gleich ist, wird es als vorteilhaft angesehen, daß das Profilelement über seine gesamte Länge mit den Randstreifen verschweißt ist. Als vorteilhaftes Schweißverfahren werden in diesem Zusammenhang Laserschweißung oder Pulverauftragsschweißung angesehen. Alternativ zur stoffschlüssigen Verbindung kommen auch andere Verbindungstechniken in Betracht, beispielsweise das Fügen oder Kleben.

Damit Anschlußelemente unabhängig von der jeweiligen Richtung, also auf jeder der vier Seiten des Profils montierbar sind, ist es zweckmäßig, daß das gegenüber dem Profilelement größere Hohlprofil einen mindestens annähernd quadratischen Querschnitt aufweist. Dabei kann die Montageschiene, bezogen auf die Seite des Profilelementes, an der sich der Schienenschlitz befindet, eine Höhe aufweisen, die der Breite des Hohlprofils entspricht. Damit können auch die Anschlußelemente universell ausgestaltet sein und sind unabhängig von ihrer Lage stets zu der Montageschiene passend. Das Profilelement in der Montageschiene kann unterschiedliche Formen haben, ohne daß sich dies auf die äußere Kontur des Hohlprofils auswirkt. So ist es beispielsweise möglich, Profilelemente mit einer flachen Querschnittsform oder aber Profilelemente mit einer größeren Tiefe einzusetzen. Das Hohlprofil kann aus zwei gleichen Seitenelementen bestehen, durch die Schlitze an zwei gegenüber liegenden Seiten des Hohlprofils gebildet sind, und in jedem der Schlitze ein Profilelement angeordnet ist. Dadurch ist eine Doppelschiene gebildet, deren Montagemöglichkeiten noch universeller sind.

Es ist durchaus möglich, das Profilelement sowie das dieses umgebende Hohlprofil aus Material mit gleicher Wandstärke herzustellen. Als zweckmäßig wird jedoch auch angesehen, daß das Profilelement eine etwas geringere Wandstärke aufweist als das Hohlprofil. Bei Montageschienen mit lediglich einem Profilelement können grundsätzlich in allen Seiten einschließlich des Profilelementbodens öffnungen, vorzugsweise zur Aufnahme von Befestigungselementen vorgesehen sein. Als öffnungen kommen insbesondere Rundlöcher oder Langlöcher in Betracht, grundsätzlich sind aber beliebige andere Formen der öffnungen möglich. Die Montageschiene, das heißt sowohl das Profilelement als auch das Hohlprofil, können aus Stahl bestehen, wobei es zweckmäßig ist, daß das Material gegen Korrosion zu schützen. Als Korrosionsschutz kommen insbesondere folgende Maßnahmen in Betracht: Feuerverzinkung, Duplex, Lackieren oder Sendzimirverzinkung. Alternativ hierzu kommt für das Profilelement und das Hohlprofil auch Edelstahl in Betracht.

Ausführungsbeispiele der Erfindung sind nachstehend anhand der Zeichnung näher erläutert. In der Zeichnung zeigt:
- Fig. 1: einen Schnitt durch eine Montageschiene quer zur Längsrichtung,
- Fig. 2: eine Ausführungsvariante zu Fig. 1 mit einem geänderten Profilelement,
- Fig. 3: eine Ausführungsvariante zu Fig. 1 mit etwas hervorstehendem Profilelement,
- Fig. 4: eine Montageschiene mit zwei Profilelementen,
- Fig. 5: eine Montageschiene mit vorstehendem Profilelement und gleichen Abmessungen in Höhe und Breite,
- Fig. 6 und 7: Beispiele für Schweißnahtausführungen,
- Fig. 8: eine Ausführungsvariante zu Fig. 1,
- Fig. 9: eine Montageschiene gemäß Fig. 8 mit Anlageplatte,
- Fig. 10: eine vergrößerte Darstellung der Abstützung in Fig. 9,
- Fig. 11: eine aus den erfindungsgemäßen Montageschienen gebildete Rahmenkonstruktion,
- Fig. 12 und 13: die Montage eines Anschlußelementes,
- Fig. 14 bis 16: unterschiedliche Lagen für die Montage,
- Fig. 17: eine Ausführungsvariante zu Fig. 11,
- Fig. 18: einen Ausschnitt einer Montageschiene mit mehreren, in verschiedene Richtungen weisenden Anschlußelementen,
- Fig. 19: eine Ausführungsvariante zu Fig. 18 mit einem Knotenelement.

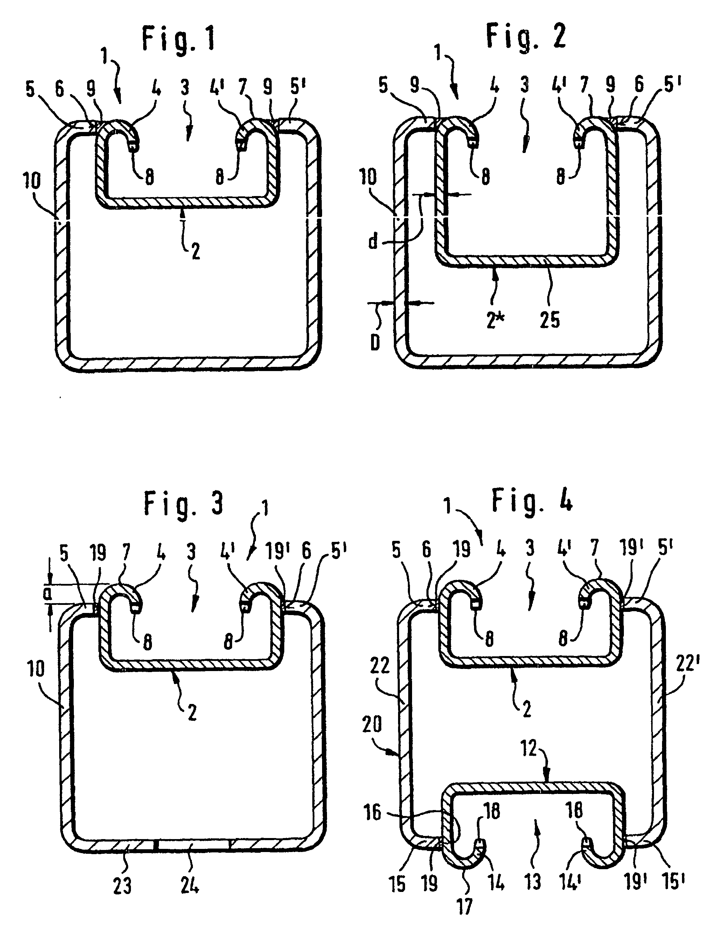

Die Fig. 1 zeigt eine Montageschiene 1 im Querschnitt. Im dargestellten Beispiel umfaßt die Montageschiene 1 ein Hohlprofil 10 mit mindestens annähernd quadratischem Querschnitt. Die Kantenlänge des Quadrates kann beispielsweise ca. 60 mm betragen, es kommen jedoch auch andere Maße in Betracht. An der in Fig. 1 oberen Kante des Hohlprofils 10 ist zwischen zwei Randstreifen 5 und 5', die gegeneinander gerichtet sind, ein Schlitz 6 gebildet, in dem ein Profilelement 2 angeordnet ist. Das Profilelement 2 weist an seiner nach außen gerichteten Seite 7 einen in Längsrichtung des Profilelementes 2 verlaufenden Schienenschlitz 3 auf, der an seinen Längsseiten durch nach innen gerichtete Stützschenkel 4, 4' begrenzt ist. Die Stützschenkel 4, 4' sind an den innerhalb des Profilelementes 2 liegenden Kanten mit Verzahnungen 8 versehen. Die Seite 7 des Profilelementes 2 schließt bündig mit der Außenkontur des Hohlprofils 10 ab, wobei in einem zwischen den Randstreifen 5 und 5' sowie dem Profilelement 2 aufgrund von dessen Kontur gebildeten Spalt eine Schweißnaht 9 angeordnet ist. Die Wandstärke des Profilelementes 2 beträgt beispielsweise 2,5 mm, wohingegen die Wandstärke des Hohlprofils 10 zum Beispiel 3 mm beträgt.

Die Fig. 2 zeigt eine Ausführungsvariante der Fig. 1, wobei die Montageschiene 1 ein Hohlprofil 10 umfaßt, das demjenigen der Fig. 1 entspricht. Eine andere Gestaltung weist lediglich das Profilelement 2* auf, da eine wesentlich größere Tiefe besitzt als das Profilelement 2 in Fig. 1. Die Tiefe des Profilelementes 2* ist so bemessen, daß das Maß von der außen liegenden Seite 7 bis zu einer Rückwand 25 größer ist als die Breite des Schienenschlitzes 3. Im übrigen stimmt die in Fig. 2 gezeigte Ausführung mit derjenigen in Fig. 1 überein, so daß für gleiche Teile die Bezugszeichen aus Fig. 1 übernommen sind. Außerdem ist aus Fig. 2 ersichtlich, daß das Profilelement 2* eine über seine Querschnittsform konstante Wanddicke d besitzt. Ebenso ist auch die Wanddicke D des Hohlprofils 10 konstant. Die Wandstärken d des Profilelementes 2* und D des Hohlprofils 10 können gleich sein, als zweckmäßig wird jedoch auch angesehen, daß die Wandstärke d etwas geringer ist als die Wandstärke D.

Die Fig. 3 zeigt eine alternative Ausgestaltung der Montageschiene 1, bei welcher das Profilelement 2 mit seiner den Schienenschlitz 3 aufweisenden Seite 7 über die Kontur der Mantelfläche des Hohlprofils 10 hervorsteht. Die durch die Randstreifen 5, 5' definierte Außenkante des Hohlprofils 10 weist zu der durch die Fläche 7 definierte Bezugskante einen Abstand a auf, der beispielsweise bis zu 5 mm betragen kann. Es ist jedoch durchaus vorteilhaft, diesen Abstand a geringer zu wählen. Aufgrund der anderen relativen Lage des Profilelementes 2 zwischen den Randstreifen 5, 5' liegen die Stirnseiten der Randstreifen 5, 5' vollständig an der Außenseite des Profilelementes 2 an und sind dort vorzugsweise mittels Laserstrahl geschweißt, so daß sich an dieser Stelle eine Schweißnaht 19, 19' ergibt. Auf der dem Schlitz 6 abgewandten Seite 23 sind öffnungen 24 zur Aufnahme von Befestigungsmitteln vorgesehen, wobei in der Darstellung in Fig. 3 lediglich eine solche Öffnung 24 z.B. Rundloch, Langloch oder ähnlich erkennbar ist.

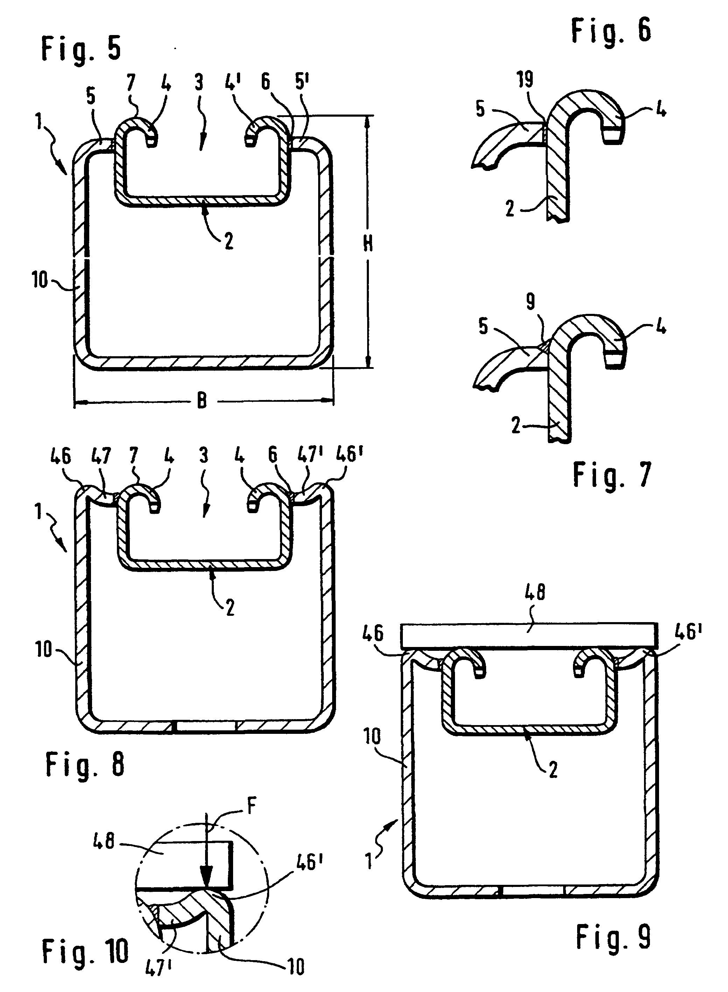

Die Fig. 4 zeigt eine Ausführungsform, bei der die Montageschiene 1 ein Hohlprofil 20 umfaßt, das aus zwei Seitenelementen 22 und 22' sowie von diesen eingefaßten Profilelementen 2 und 12 besteht. Die Seitenelemente 22 und 22' sind vollständig symmetrisch und besitzen Randstreifen 5, 15 bzw. 5' und 15', zwischen denen Schlitze 6 und 16 gebildet sind. Mit den die Schlitze 6, 16 begrenzenden Stirnseiten dieser Randstreifen 5, 15 bzw. 5', 15' liegen die Seitenelements 22, 22' an den Seitenflächen der Profilelemente 2, 12 an und sind mit diesen stoffschlüssig verbunden, beispielsweise durch Schweißnähte 19, 19', die durch Laserstrahlschweißung erzeugt sind. Bei der Montageschiene 1 gemäß Fig. 4 handelt es sich um eine Doppelschiene, da zwei Profilelemente 2, 12 vorhanden sind, mit einander abgewandten Schienenschlitzen 3 und 13. Die als Bezugskante dienende Seite 7 besteht aus der Außenkontur des Hohlprofils 20 um den gleichen Betrag hervor wie die Seite 17 des Profilelementes 12.

Die Fig. 5 zeigt eine Montageschiene 1, die aus dem Hohlprofil 10 besteht, welches die Breite B aufweist. Zwischen den Randstreifen 5 und 5' des Hohlprofils 10 ist das Profilelement 2 derart eingeschweißt, daß die nach außen gerichtete Seite 7 des Profilelementes 2 aus dem Hohlprofil 10 soweit hervorsteht, daß die Montageschiene eine Höhe H aufweist, die gleich der Breite B ist. Auf diese Weise können Anschlußelemente universell angebaut werden, da das Anschlußmaß auf allen vier Seiten gleich ist.

Die Fig. 6 zeigt in vergrößerter Darstellung eine stumpfe Schweißnaht 19, bei der die Schweißnaht über die gesamte Materialdicke des Randstreifens 5 reicht. Zur Erzeugung einer solchen Schweißnaht dient vorzugsweise ein Laser. Diese Anbindung des Hohlprofils 10 an das innenliegende Profilelement 2 ermöglicht die größtmögliche Schweißnahttiefe, mit der eine maximale Trageigenschaft erreicht werden kann. In Fig. 7 ist eine Schweißnaht 9 als Kehlnaht ausgeführt.

Im Ausführungsbeispiel der Fig. 8 ist das Hohlprofil 10 an der den Schlitz 6 aufweisenden Seite mit Bögen 46, 46' eines kleinen Radius gestaltet, wobei diese Bögen 46, 46' über mehr als 90° reichen und nach innen gerichtet sind, bevor sie in Randstreifen 47, 47' übergehen, die zueinander gerichtet und gegenüber den Außenseiten der Bögen 46, 46' nach innen versetzt sind. Das Profilelement 2 ist derart in das Hohlprofil 10 eingesetzt und in diesem befestigt, daß die nach außen gerichtete Seite 7 bündig mit der Kontur der Bögen 46, 46' abschließt.

Aus Fig. 9 wird deutlich, daß die Montageschiene 1 gemäß Fig. 8 eine Anlage für anzubringende Bauteile an den Bögen 46, 46' bietet, was durch die Abstützung einer Anlageplatte 48 an den Bögen 46, 46' erreicht ist. Auf diese Weise wird unabhängig von der Berührung der Montageplatte 48 mit dem Profilelement 2 die Kraft unmittelbar in das Hohlprofil 10 eingeleitet, und zwar an der durch die Bögen 46, 46' gebildeten Abstützfläche, wie dies in Fig. 10 durch den Pfeil F angegeben ist. Diese Ausgestaltung erhöht die Formschlüssigkeit in den Verbindungsteilen quer zur Schienenlängsachse.

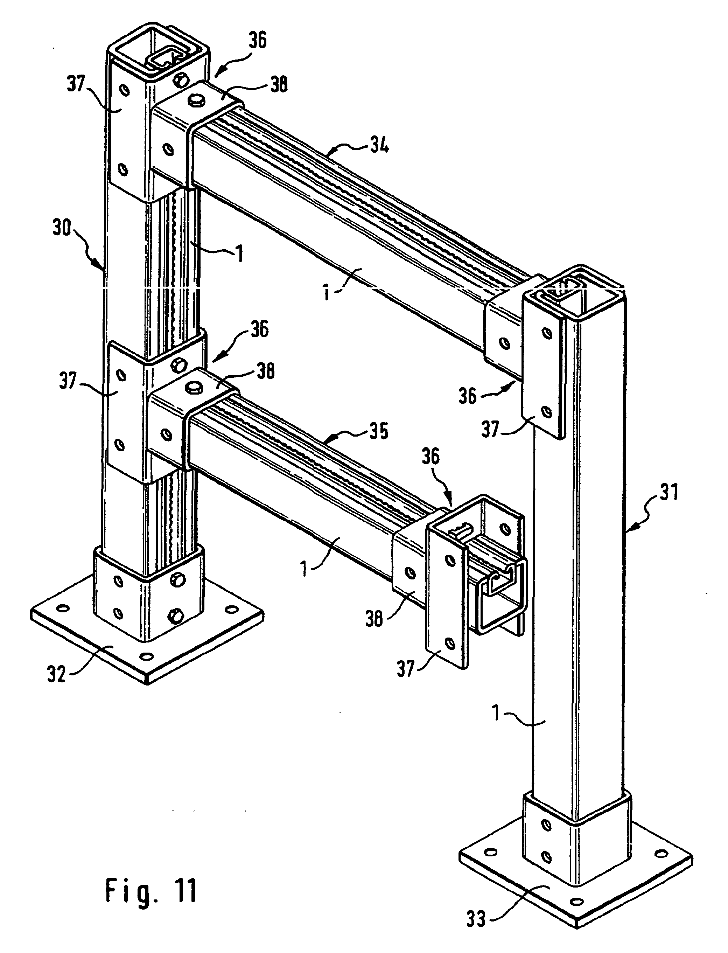

Die Fig. 11 zeigt eine aus den erfindungsgemäßen Montageschienen 1 gebildete Rahmenkonstruktion, wobei die seitlichen Träger 30, 31 aus Montageschienen 1 gemäß der Beschreibung in Fig. 1 gebildet sind. Die seitlichen Träger 30, 31 sind an ihren unteren Enden mit Stützenschuhen 32, 33 versehen. Zur Befestigung von als Traversen 34, 35 dienenden Montageschienen sind Anschlußelemente 36 vorgesehen, die jeweils ein Verbindungsteil 37 und ein Konsolenteil 38 umfassen. Der Verbindungsteil 37 ist im wesentlichen U-förmig gestaltet und umgreift die Montageschiene 1 an drei Seiten, von denen eine Seite dem Profilelement 2 in der Montageschiene 1 des jeweiligen seitlichen Trägers 30, 31 zugewandt sein muß. Im Ausführungsbeispiel der Fig. 11 ist dies der Boden der U-Form. Zur Verbindung der Anschlußelemente 36 mit den als seitliche Träger 31, 30 dienenden Montageschienen i sind zweckmäßigerweise solche Befestigungsmittel vorgesehen, die in DE 297 14 621 U1 beschrieben sind. Solche Befestigungsmittel können auch zur Verbindung der seitlichen Träger 30, 31 mit den Stützschuhen 32, 33 vorgesehen werden.

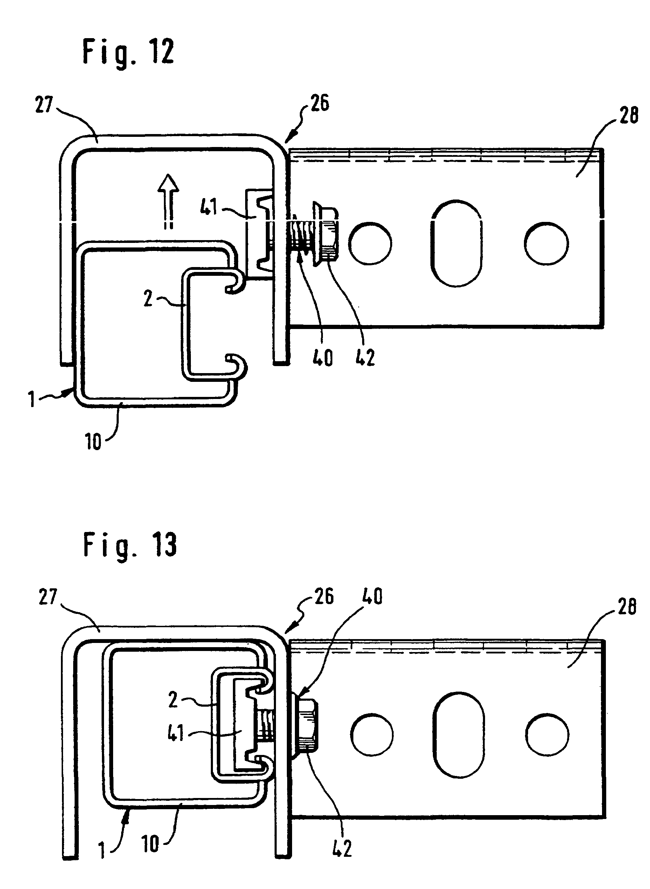

Anhand der Fig. 12 und 13 wird erläutert, auf welche Weise Anschlußelemente 26 an Montageschienen 1, die bereits an ihren jeweiligen Enden fest verbunden sind, montiert werden können. Gemäß der Ausführung des Anschlußelementes 26, nämlich mit einem an einer Seitenwand des Verbindungsteils 27 angeordneten Konsolenteil 28 wird das Verbindungsteil 27 seitlich auf die Montageschiene 1 gesteckt bzw. relativ zu dem Anschlußelement 26 die Montageschiene 1 in den Verbindungsteil 27 eingeführt. Dies ist durch den angegebenen Pfeil angedeutet. In dem eingeführten Zustand, der sich aus Fig. 13 ergibt, kann die am Anschlußelement 26 vorgesehene Spannschraube 40 in das Profilelement 2 eingeführt und durch Verdrehen des Hammerkopfes 41 hinter den Stützschenkeln 4 eingehakt werden. Zur definitiven Befestigung ist dann noch ein Verdrehen der Spannmutter 42 erforderlich.

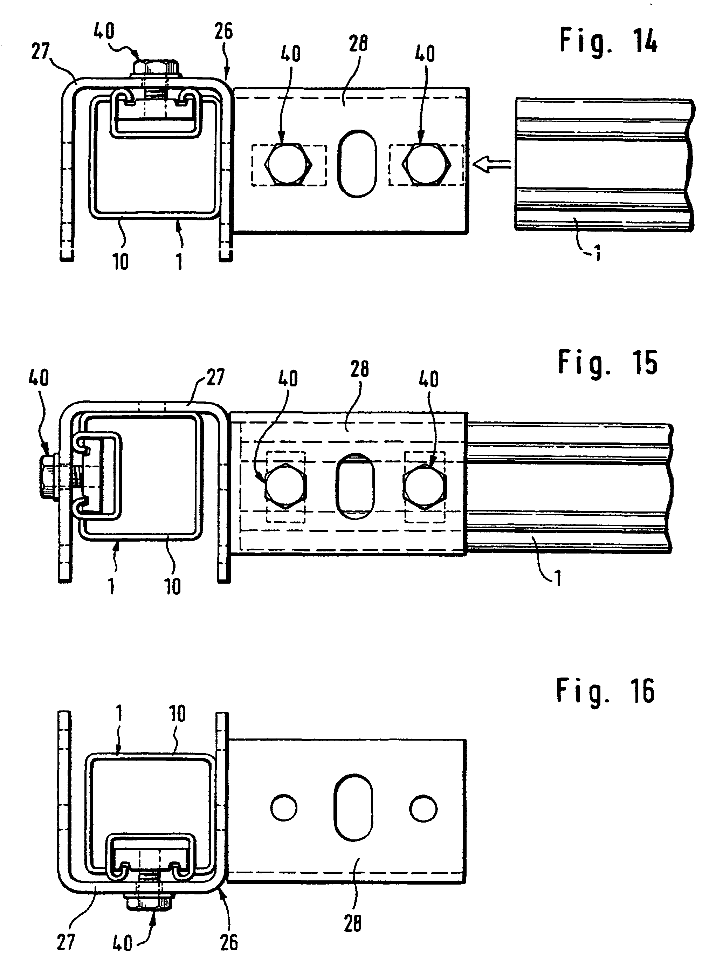

Die Fig. 14 macht deutlich, daß bei einer um 90° gedrehten Montageschiene 1, bei der der Schienenschlitz 3 nach oben gerichtet ist, das Anschlußelement 26 auf die gleiche Weise befestigbar ist, allerdings ist in diesem Fall die Spannschraube 40 am Boden der U-Form des Verbindungsteils 27 vorgesehen. Außerdem zeigt Fig. 14, daß an dem Konsolenteil 28 eine weitere Montageschiene befestigbar ist, die in den Konsolenteil 28 einsteckbar ist. Die Befestigungsmittel sind vorzugsweise wiederum Spannschrauben 40 in der bereits beschriebenen Art.

Die Fig. 15 und 16 zeigen die Befestigungsmöglichkeit, wobei gemäß Fig. 13 die Montageschiene 1 gegenüber der Fig. 13 um 180° verdreht ist und in Fig. 16 nochmals um weitere 90°, so daß bei letzterer der Schienenschlitz nach unten zeigt.

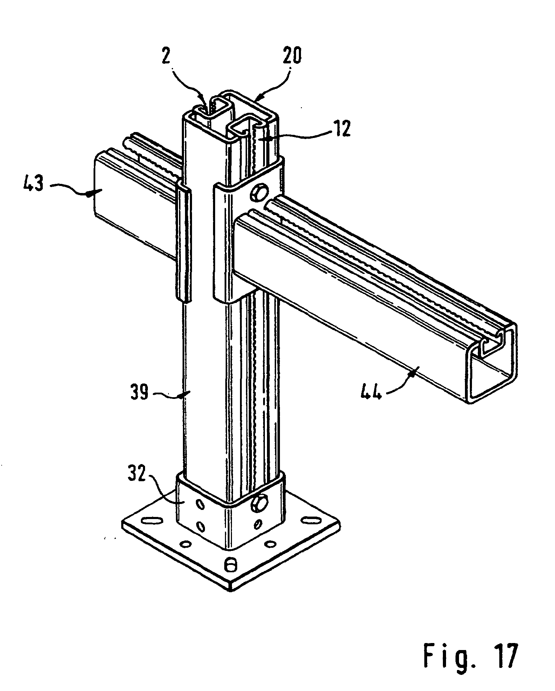

Die Fig. 17 zeigt einen Ausschnitt einer Ausführungsvariante zu Fig. 11, wobei als vertikaler Träger 39 ein Hohlprofil 20 gemäß Fig. 4 vorgesehen ist. Dieser vertikale Träger 39 ist wiederum mit einem Stützschuh 32 versehen, um den vertikalen Träger 39 auf einem Untergrund zu befestigen. Aufgrund der Ausgestaltung des vertikalen Trägers 39 als Doppelschiene können zwei horizontale Traversen 43, 44 auf beliebiger, insbesondere auch gleicher oder lediglich geringfügig unterschiedlicher Höhe an dem Vertikalträger 39 befestigt werden.

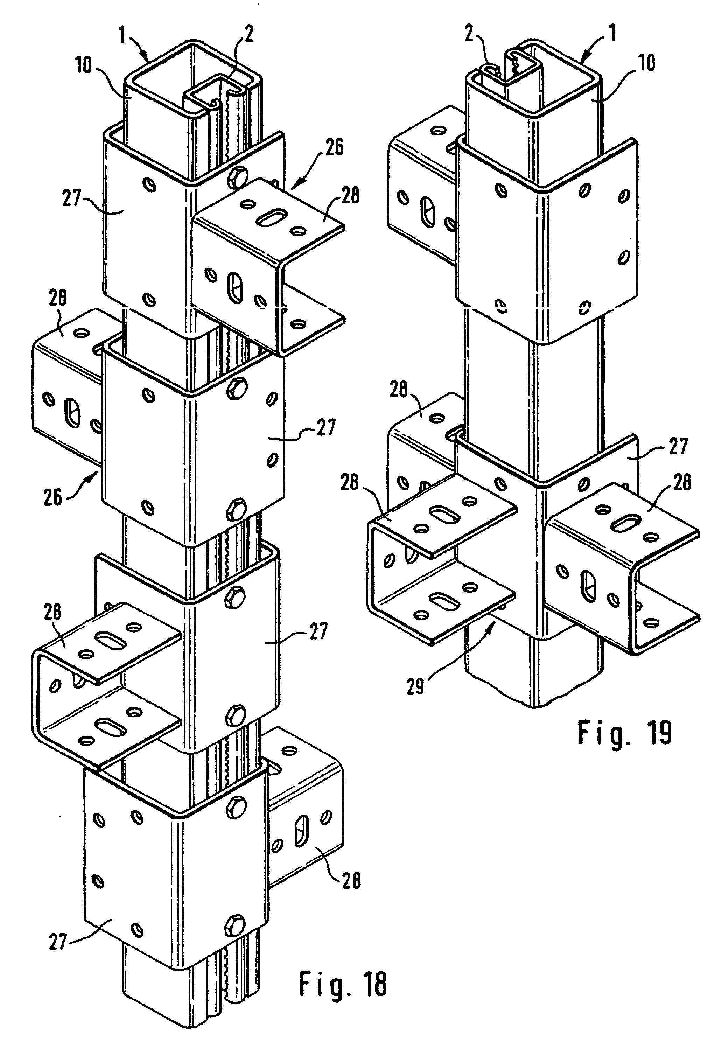

Die Fig. 18 zeigt einen Ausschnitt einer Montageschiene 1 mit mehreren in verschiedene Richtungen weisenden Anschlußelementen 26. Es wird daraus deutlich, daß trotz der universellen Gestaltung der Anschlußelemente 26 die Konsolenteile 28 in jede der vier Richtungen von dem quadratischen Hohlprofil 10 abstehen können, da es lediglich darauf ankommt, in welcher relativen Lage das Verbindungsteil 27 auf das Hohlprofil 10 aufgesteckt wird.

Aus Fig. 19 ist ersichtlich, daß nicht nur Anschlußelemente 26 mit einem einfachen Konsolenteil 28 an der Montageschiene 1 anbringbar sind, sondern daß auch Anschlußelemente 29 vorgesehen werden können, bei denen das Verbindungsteil 27 bis zu drei Konsolenteile 28 tragen kann. Auf diese Weise können in verschiedene Richtungen weisende Konsolenteile auf derselben Höhe angeordnet werden ohne Verwendung eines Doppelprofils.

Die vorstehend beschriebene Erfindung zeichnet sich nicht nur dadurch aus, daß die Montageschiene 1 universell verwendbar ist, sondern unabhängig von der Form der Profilelemente innerhalb des Hohlprofils stets eine gleiche Kontur zur Aufnahme der Anschlußelemente zur Verfügung steht. Dies ermöglicht, daß unabhängig von der Lage des Schienenschlitzes die Verbindungselemente aufgesteckt werden können, ohne daß ein unnötiger Luftspalt entsteht. Die Stabilität der Montageschiene ist nicht allein von dem Profilelement abhängig, sondern wird im wesentlichen bestimmt durch die Gesamtheit von Hohlprofil und Profilelement, die zusammen einen formsteifen Rahmen bilden. Durch die konstruktive Abstimmung der Einzelteile untereinander auf die vorhandene Belastung können bei gleichem Gewicht und vergleichbarer Größe der Außenkontur gegenüber den bisher bekannten Anordnungen wesentlich größere und vor allem Torsion bewirkende Kräfte in das Unterstützungssystem eingeleitet werden.

Das vorstehend beschriebene System kann eine Vielzahl der bekannten Problemstellungen des industriellen Rohrleitungsbaus mit einem Minimum an multifunktionalen Bauteilen lösen, die die Lage des Schienenschlitzes von allen anzuschließenden Schienen unberücksichtigt läßt. Die erforderlichen Bauteile ermöglichen auch unabhängig von der Lage des Schienenschlitzes eine Anbindung in allen vier Richtungen, ohne daß die Bauteile in das Schienenende eingeführt werden müssen. Die Möglichkeit, die Bauteile auf diese Weise einsetzen zu können, erlaubt die nachträgliche Montage in bereits fertige Konstruktionen, bei denen die Schienenenden fest verbaut sind. Es wird noch darauf hingewiesen, daß die erfindungsgemäße Montageschiene auch in Querschnittsformen ausgeführt werden kann, die von der quadratischen Form abweichen, beispielsweise als Rechteck.

## Patentansprüche

1. Aus mindestens einem Profilelement (2, 2*, 12) gebildete Montageschiene (1) mit einem entlang einer Seite (7, 17) in Längsrichtung des Profilelementes (2, 2*, 12) verlaufenden Schienenschlitz (3, 13) und mit neben dem Schienenschlitz (3, 13) angeordneten, nach innen gerichteten Stützschenkeln (4, 4'; 14, 14'),
**dadurch gekennzeichnet, daß** das Profilelement (2, 2*, 12) in einem zwischen Randstreifen (5, 5'; 15, 15'; 47, 47') einer Längsseite gebildeten Schlitz (6, 16) eines größeren Hohlprofils (10, 20) angeordnet und mit diesem fest verbunden ist, wobei der Schienenschlitz (3, 13) des Profilelementes (2, 2*, 12) nach außen gerichtet ist.

2. Montageschiene nach Anspruch 1,
**dadurch gekennzeichnet, daß** die Seite (7, 17) des Profilelementes (2, 12) bündig mit der Mantelfläche des Hohlprofils (10, 20) abschließt.

3. Montageschiene nach Anspruch 2,
**dadurch gekennzeichnet, daß** das Hohlprofil (10) an seiner den Schlitz (6) aufweisenden Seite mit seitlichen Bögen (46, 46') versehen ist, an die sich nach innen versetzte, jedoch zueinander gerichtete Randstreifen (47, 47') anschließen.

4. Montageschiene nach Anspruch 1,
**dadurch gekennzeichnet, daß** die Seite (7, 17) des Profilelementes (2, 12) über die Kontur der Mantelfläche des Hohlprofils (10, 20) hervorsteht.

5. Montageschiene nach Anspruch 1 bis 4,
**dadurch gekennzeichnet, daß** das Profilelement (2, 2*, 12) mit den Randstreifen (5, 5'; 15, 15'; 47, 47') stoffschlüssig verbunden ist.

6. Montageschiene nach Anspruch 5,
**dadurch gekennzeichnet, daß** das Profilelement (2, 12) über seine gesamte Länge mit den Randstreifen (5, 5'; 15, 15'; 47, 47') verschweißt ist.

7. Montageschienen nach Anspruch 6,
**dadurch gekennzeichnet, daß** das Profilelement (2, 12) durch Laserschweißung mit dem Hohlprofil (10, 20) verbunden ist.

8. Montageschiene nach Anspruch 6,
**dadurch gekennzeichnet, daß** das Profilelement (2, 12) durch Pulverauftragsschweißung mit dem Hohlprofil (10, 20) verbunden ist.

9. Montageschiene nach einem der Ansprüche 1 bis 4,
**dadurch gekennzeichnet, daß** das Profilelement (2, 2*, 12) und das Hohlprofil (10, 20) an dessen Randstreifen (5, 5'; 15, 15'; 47, 47') mechanisch gefügt sind.

10. Montageschiene nach einem der Ansprüche 1 bis 4,
**dadurch gekennzeichnet, daß** das Profilelement (2, 2*, 12) mit den Randstreifen (5, 5'; 15, 15'; 47, 47') des Hohlprofils (10, 20) durch ein Klebemittel verbunden ist.

11. Montageschiene nach einem der Ansprüche 1 bis 10,
**dadurch gekennzeichnet, daß** an den Stützschenkeln (4, 4'; 14, 14') eine Verzahnung (8, 18) vorgesehen ist.

12. Montageschiene nach einem der Ansprüche 1 bis 11,
**dadurch gekennzeichnet, daß** das größere Hohlprofil (10, 20) einen mindestens annähernd quadratischen Querschnitt aufweist.

13. Montageschiene nach Anspruch 4 und Anspruch 12,
**dadurch gekennzeichnet, daß** die Montageschiene (1) eine Höhe (H) bezogen auf die Seite (7) des Profilelementes (2), an der sich der Schienenschlitz (B) befindet, aufweist, die einer Breite (B) des Hohlprofils (10) entspricht.

14. Montageschiene nach einem der Ansprüche 1 bis 13,
**dadurch gekennzeichnet, daß** das Hohlprofil (20) aus zwei gleichen Seitenelementen (22, 22') besteht, durch die die Schlitze (6, 16) an zwei gegenüber liegenden Seiten des Hohlprofils (20) gebildet sind und in jeder der Schlitze (6, 16) ein Profilelement (2, 12) angeordnet ist.

15. Montageschiene nach einem der Ansprüche 1 bis 14,
**dadurch gekennzeichnet, daß** das Profilelement (2, 12) eine geringere Wandstärke (d) aufweist als die Wandstärke (D) des Hohlprofils (10, 20).

16. Montageschiene nach einem der Ansprüche 1 bis 13,
**dadurch gekennzeichnet, daß** in einer oder mehreren Seiten des Hohlprofils (2) öffnungen (24), vorzugsweise zur Aufnahme von Befestigungsmitteln vorgesehen sind.

17. Montageschiene nach Anspruch 16,
**dadurch gekennzeichnet, daß** die öffnungen (24) als Rundlöcher oder Langlöcher ausgebildet sind.

18. Montageschiene nach einem der Ansprüche 1 bis 17,
**dadurch gekennzeichnet, daß** sowohl das Profilelement (2, 12) als auch das Hohlprofil (10, 20) aus Stahl bestehen und die Montageschiene gegen Korrosion geschützt ist, insbesondere durch Feuerverzinkung, Duplex, Lackierung oder Sendzimirverzinkung.

19. Montageschiene nach einem der Ansprüche 1 bis 17,
**dadurch gekennzeichnet, daß** sowohl das Profilelement (2, 12) als auch das Hohlprofil (10, 20) aus Edelstahl bestehen.

## Claims

1. Assembly rail (1) incorporating at least one profiled element (2, 2*, 12) with a rail slot (3, 13) extending in the longitudinal direction along one side (7, 17) of the profiled element (2, 2*, 12) and inwardly directed support legs (4, 4'; 14, 14') disposed adjacent to the rail slot (3, 13),
**characterised in that** the profiled element (2, 2*, 12) is disposed in a slot (6, 16) of a larger hollow section (10, 20) between peripheral strips (5, 5'; 15, 15'; 47, 47') of a longitudinal side and fixedly joined thereto, the rail slot (3, 13) of the profiled element (2, 2*, 12) being outwardly directed.

2. Assembly rail as claimed in claim 1,
**characterised in that** the side (7, 17) of the profiled element (2, 12) terminates flush with the external face of the hollow section (10, 20).

3. Assembly rail as claimed in claim 2,
**characterised in that** the side of the hollow section (10) incorporating the slot (6) is provided with lateral curved regions (46, 46'), adjoined by mutually facing peripheral strips (47, 47') but arranged offset towards the inside.

4. Assembly rail as claimed in claim 1,
**characterised in that** the side (7, 17) of the profiled element (2, 12) stands proud of the contour of the external face of the hollow section (10, 20).

5. Assembly rail as claimed in claim 1 to 4,
**characterised in that** the profiled element(2, 2*, 12) is connected to the peripheral strips (5, 5'; 15, 15'; 47, 47') by a material join.

6. Assembly rail as claimed in claim 5.
**characterised in that** the profiled element (2, 12) is welded across its entire length to the peripheral strips (5, 5'; 15, 15'; 47, 47').

7. Assembly rail as claimed in claim 6, **characterised in that** the profiled element (2, 12) is joined to the hollow section (10, 20) by laser welding.

8. Assembly rail as claimed in claim 6,
**characterised in that** the profiled element (2, 12) is joined to the hollow section (10, 20) by powder deposition and welding.

9. Assembly rail as claimed in one of claims 1 to 4,
**characterised in that** the profiled element (2, 2*, 12) is mechanically mated with the hollow section (10, 20) at its peripheral strips (5, 5'; 15, 15'; 47, 47').

10. Assembly rail as claimed in one of claims 1 to 4,
**characterised in that** the profiled element (2, 2*, 12) is joined to the peripheral strips (5, 5'; 15, 15'; 47, 47') of the hollow section (10, 20) by means of an adhesive.

11. Assembly rail as claimed in one of claims 1 to 10.
**characterised in that** teeth (8, 18) are provided on the support legs (4, 4'; 14, 14').

12. Assembly rail as claimed in one of claims 1 to 11,
**characterised in that** the bigger hollow section (10, 20) has an at least substantially square cross section.

13. Assembly rail as claimed in claim 4 and claim 12,
**characterised in that** the assembly rail (1) has a height (H) relative to the side (7) of the profiled element (2) incorporating the rail slot (B) which corresponds to a width (B) of the hollow section (10).

14. Assembly rail as claimed in one of claims 1 to 13,
**characterised in that** the hollow section (20) consists of two identical side elements (22, 22') by means of which the slots (6. 16) are formed on two opposing sides of the hollow section (20) and a profiled element (2, 12) is disposed in each of the slots (6, 16).

15. Assembly rail as claimed in one of claims 1 to 14,
**characterised in that** the profiled element (2, 12) has a bigger wall thickness (d) than the wall thickness (D) of the hollow section (10, 20).

16. Assembly rail as claimed in one of claims 1 to 13,
**characterised in that** orifices (24), preferably for accommodating fixing means, are provided in one or more sides of the hollow section (2).

17. Assembly rail as claimed in claim 16,
**characterised in that** the orifices (24) may be round holes or slots.

18. Assembly rail as claimed in one of claims 1 to 17,
**characterised in that** both the profiled element (2, 12) and the hollow section (10, 20) are made from steel and the assembly rail is protected against corrosion, in particular by a hot galvanised coating, a duplex sheet, a lacquer coating or a Sendzimir galvanised coating.

19. Assembly rail as claimed in one of claims 1 to 17,
**characterised in that** both the profiled element (2, 12) and the hollow section (10, 20) are made from stainless steel.

## Revendications

1. Rail de montage (1) formé d'au moins un élément profilé (2, 2*, 12) avec une fente pour rail (3, 13) s'étendant le long d'un côté (7, 17) dans le sens longitudinal de l'élément profilé (2, 2*, 12) et avec des traverses d'appui (4, 4' ; 14, 14') orientées vers l'intérieur et disposées à côté de la fente pour rail (3, 13), **caractérisé en ce que** l'élément profilé (2, 2*, 12) est disposé dans une fente (6, 16), formée entre des bandes latérales (5, 5' ; 15, 15' ; 47, 47') d'une face longitudinale, d'un profilé creux (10, 20) plus important et fermement relié à celui-ci, moyennant quoi la fente pour rail (3, 13) de l'élément profilé (2, 2*, 12) est orientée vers l'extérieur.

2. Rail de montage selon la revendication 1, **caractérisé en ce que** la face (7, 17) de l'élément profilé (2, 12) est isolée au ras de l'aire latérale du profilé creux (10, 20).

3. Rail de montage selon la revendication 2, **caractérisé en ce que** le profilé creux (10) est doté, sur sa face comprenant la fente (6), d'arcs latéraux (46, 46') auxquels se raccordent des bandes latérales (47, 47') décalées vers l'intérieur, mais tournées les unes vers les autres.

4. Rail de montage selon la revendication 1, **caractérisé en ce que** la face (7, 17) de l'élément profilé (2, 12) ressort au dessus du contour de l'aire latérale du profilé creux (10, 20).

5. Rail de montage selon la revendication 1 à 4, **caractérisé en ce que** l'élément profilé (2, 2*, 12) est relié par complémentarité de matière aux bandes latérales (5, 5' ; 15' ; 47, 47').

6. Rail de montage selon la revendication 5, **caractérisé en ce que** l'élément profilé (2, 12) est soudé sur toute sa longueur aux bandes latérales (5, 5' ; 15, 15' ; 47, 47').

7. Rail de montage selon la revendication 6, **caractérisé en ce que** l'élément profilé (2, 12) est relié par soudage laser au profilé creux (10, 20).

8. Rail de montage selon la revendication 6, **caractérisé en ce que** l'élément profilé (2, 12) est relié au profilé creux (10, 20) par soudage à superposition de poudre.

9. Rail de montage selon l'une des revendications 1 à 4, **caractérisé en ce que** l'élément profilé (2, 2*, 12) et le profilé creux (10, 20) sont jointés mécaniquement sur le bord latéral de ce dernier (5, 5' ; 15, 15' ; 47, 47').

10. Rail de montage selon l'une des revendications 1 à 4, **caractérisé en ce que** l'élément profilé (2, 2*, 12) est relié aux bords latéraux (5, 5' ; 15, 15' ; 47, 47') du profilé creux (10, 20) par un adhésif.

11. Rail de montage selon l'une des revendications 1 à 10, **caractérisé en ce qu'**une denture (8, 18) est prévue sur les traverses d'appui (4, 4' ; 14, 14').

12. Rail de montage selon l'une des revendications 1 à 11, **caractérisé en ce que** le profilé creux (10, 20) plus important comprend une section transversale au moins approximativement quadratique.

13. Rail de montage selon la revendication 4 et la revendication 12, **caractérisé en ce que** le rail de montage (1) comprend une hauteur (H) rapportée à la face (7) de l'élément profilé (2) sur laquelle se trouve la fente pour rail (B), laquelle correspond à une largeur (B) du profilé creux (10).

14. Rail de montage selon l'une des revendications 1 à 13, **caractérisé en ce que** le profilé creux (20) est composé de deux éléments latéraux (22, 22') identiques par lesquels sont formées les fentes (6, 16) sur deux côtés situés en vis-à-vis du profilé creux (20), et un élément profilé (2, 12) est disposé dans chacune des fentes (6, 16).

15. Rail de montage selon l'une des revendications 1 à 14, **caractérisé en ce que** l'élément profilé (2, 12) comprend une épaisseur de paroi (d) plus mince que l'épaisseur de paroi (D) du profilé creux (10, 20).

16. Rail de montage selon l'une des revendications 1 à 13, **caractérisé en ce que** des ouvertures (24) sont prévues, dans une ou plusieurs faces du profilé creux (2), de préférence pour le logement des moyens de fixation.

17. Rail de montage selon la revendication 16, **caractérisé en ce que** les ouvertures (24) sont configurées comme des orifices ronds ou des orifices longs.

18. Rail de montage selon une des revendications 1 à 17, **caractérisé en ce que** autant l'élément profilé (2, 12) que le profilé creux (10, 20) sont constitués d'acier, et le rail de montage est protégé contre la corrosion, en particulier par la galvanisation à chaud, le procédé duplex, le laquage ou la galvanisation Senzimir.

19. Rail de montage selon une des revendications 1 à 17, **caractérisé en ce que** autant l'élément profilé (2, 12) que le profilé creux (10, 20) sont composés d'acier spécial.
